# EUROPEAN PATENT APPLICATION

(11) **EP 4 650 969 A1**
(43) Date of publication of application: **19.11.2025**
(21) Application number: 24175962.0
(22) Date of filing: 15.05.2024
(51) Int. Cl.: G06F 11/36, H04L 43/18, H04L 43/50, H04L 9/40, G06F 8/20

(54) **OMPUTER-IMPLEMENTED METHOD FOR AUTOMATICALLY ANALYZING A COMMUNICATION PROTOCOL USING ABSTRACT SYNTAX NOTATION ONE**

(71) Applicant: Siemens Aktiengesellschaft, 80333 München (DE)
(72) Inventor: Railean, Alexandr, 80995 München (DE); Wimmer, Martin, 85579 Neubiberg (DE); Kretschmer, Andreas, 81669 München (DE)
(74) Representative: Siemens Patent Attorneys

(57) **Abstract**

Analyzing apparatus (10), ASN.1 query unit (20) and computer-implemented method for automatically analyzing a communication protocol implemented in a server (14), comprising the steps performed by an analyzing apparatus (10),
- sending (S1) a request message according to a test case of the communication protocol to the server (14),
- receiving (S2) a response message including a data structure (DS) encoded in ASN.1 scheme from the server (14),
- querying (S3) the data structure for at least one information defined by the test case using an ASN.1 query unit, and automatically extracting the information (el) from the ASN.1 encoded data structure,
- analyzing (S4) the extracted information (el) with respect to an expected information defined in the test case, and
- outputting (S5) the analysis result to an output interface.

## Description

### Technical Field

The present invention relates to a system and a computer-implemented method for automatically analyzing a communication protocol implemented in a server, an analyzing apparatus and an ASN.1 query unit configured to perform at least a subset of the steps of the computer-implemented method.

### Background Art

Nowadays, industrial environments are set up of a multitude of devices, control units, and similar comprising at least one digital certificate to prove, e.g., its identity and/or to securely communicate via cryptographically secured communication connections with each other. Digital certificates are requested, generated, and issued in the context of a Public Key Infrastructure PKI. The PKI comprises many entities like a certification authority, a registration authority and devices to issue, evaluate and request the digital certificates.

Abstract Syntax Notation One, abbreviated by ASN.1, is a standard interface description language specified by ITU-T X.208 for defining data structures that can be serialized and deserialized in a cross-platform way. It can express structures of an arbitrary complexity, and it can be encoded into compact payloads. This makes it a common choice in the design of communication protocols like Certificate Management Protocol (CMP) which is an Internet protocol standardized by the IETF used for obtaining X.509 digital certificates in a public key infrastructure, Simple Network Management Protocol (SNMP) or 2G-, LTE-, or 5G-Mobile Telecommunications System, and furthermore. The ASN.1 standard does not define an interface for querying ASN.1 encoded data. This means that a specific query interface has to be defined for different programming languages using ASN1 libraries.

When a PKI server, e.g., a certificate authority or registration authority is integrated into the industrial environment, the implemented protocol interfaces, e.g., CMP protocol interface, cryptographic message syntax (CMS) protocol, online certificate status protocol (OCSP) and similar, have to be tested for correct operation using an automated test suite. CMP protocol comprises ASN.1 encoded data as it is used in Mobile Telecommunication Systems which use ASN.1 encoded data.

As there does not exist a commonly specified ASN.1 query interface, a specific query interface has to be generated to test the protocol. This leads to a diversity of Application Programming Interfaces (APIs) which are not only specific to a given programming language, but also to a specific library.

Although there is no query language for ASN.1, similar notations exist for other types of data structures. E.g., "XPath" is used for querying eXtended Markup Language (XML) structures, standardized by W3C. "Jq" is a tool for querying JavaScript Object Notation (JSON) data structures. Thus, an alternative could work by transforming an ASN.1 structure into XML and then querying it with XPath or transforming it into JSON and then querying it with Jq. However, this incurs a performance penalty for the conversion to another format, and possibly another cost for a reverse conversion, if the software has to produce ASN1 output.

### Summary of Invention

Therefore, it is one object of the present application to facilitate automated testing for communication protocols using ASN.1 encoded data implemented on a server in an industrial environment, e.g., in a Private Key Infrastructure. Another object is to optimize the performance of communication protocol testing, especially to reduce complexity no longer requiring any conversion operations for ASN.1 encoded data structures used in such servers and protocols.

The objective is solved by the features of the independent claims. The dependent claims contain further developments of the invention.

A first aspect of the invention concerns Computer-implemented method for automatically analyzing a communication protocol implemented in a server, comprising the steps performed by an analyzing apparatus,
- sending a request message according to a test case of the communication protocol to the server,
- receiving a response message including a data structure encoded in ASN.1 scheme from the server,
- querying the data structure for at least one information defined by the test case using an ASN.1 query unit, which automatically extracts the information from the ASN.1 encoded data structure,
- analyzing the extracted information with respect to an expected information defined in the test case, and
- outputting the analysis result to an output interface.

The method facilitates extracting information from an ASN.1 encoded data structure of the protocol and accelerates protocol testing.

A second aspect of the invention concerns an analyzing apparatus for automatically analyzing a communication protocol implemented in a server comprising a server interface, an ASN.1 query unit and an output interface, wherein
the server interface is configured for:
   - sending a request message according to a test case of the communication protocol to the server, the request message is formulated in accordance with the protocol,
   - receiving a response message including a data structure encoded in ASN.1 scheme from the server,
the ASN.1 query unit is configured for:
   - querying the data structure for at least one information defined by the test case, which automatically extracts the information from the ASN.1 encoded data structure,
the output interface is configured for:
   - analyzing the extracted information with respect to an expected information defined in the test case, and
   - outputting the analysis result.

The analyzing apparatus extracts the queried information from the ASN.1 encoded data structure without requiring any transformation of the ASN.1 structure in the protocol into XML or JSON and then querying it with XPath or Jq. Thus, the method allows an efficient implementation, which does not introduce additional conversion and/or processing steps.

A third aspect concerns an ASN.1 query unit for querying information stored in data structures encoded according to ASN1 comprising a query interface and an ASN.1 library configured for
- querying a data structure for at least one information defined by a test case, and automatically extracting the information from the ASN.1 encoded data structure, and
- outputting the extracted information.

The ASN.1 query unit provides a query tool applicable for retrieving information from any ASN.1 structured data structure. Since the ASN.1 specification does not define an interface for querying data, creating an ASN1 library for a particular programming language requires to invent a specific query interface for this ASN1 library. By providing its own ASN.1 library the ASN.1 query unit is applicable for analyzing different communication protocols and applicable in analyzing methods which are implemented in different programming languages.

A fourth aspect concerns a computer program product directly loadable into the internal memory of at least on one digital computer, comprising software code portions for performing the steps of the method when said product is run on said at least one digital computer.

### Description of Embodiments

Independent of the grammatical term usage, individuals with male, female or other gender identities are included within the term.

In a preferable embodiment the ASN.1 query unit comprises a query interface and an ASN.1 query library.

By such a separation of functionality, the query interface can be kept unmodified when the ASN.1 query library may be adapted, e.g., to ASN.1 structures specific for different communication protocols.

In a preferred embodiment the ASN.1 library comprises an indication of the communication protocol to be analyzed and provides an ASN.1 structure of the ASN.1 encoded data of the communication protocol as an object to which a dot-notation applies.

This enables an adaption of the ASN.1 query unit to the communication protocol to be tested without any further modifications for extracting the requested information. The ASN.1 structure provides a mapping of the ASN.1 encoded data to an object structured in the dot-notation of query expressions.

In a preferred embodiment the query interface provides query expressions structured in the dot-notation syntax chaining components of the ASN.1 encoded data structure indicating the location of the desired information.

This enables a short and concise formulation of query expressions which are language-agnostic. I.e., the syntax of query expressions can be used in different programming languages. Additionally, the dot-notation enables a low barrier of entry due to the use of a fundamental notation from programming languages. The query expressions require only minor knowledge of the internals of the analyzed communication protocol.

In a preferred embodiment the query expression comprises a cast expression indicating the requested type of data/format of the extracted information. The extracted data is transformed into the requested type of data by primitives of the query interface.

This allows the extracted information to be provided depending in the data format required for the test case analysis, resulting in an accelerated analysis and thus short testing time.

In a preferred embodiment the ASN.1 query unit returns an error statement if the queried information cannot be extracted, the error statement indicating a component of the query expression which could not be extracted.

This allows easy tracking of faults in the applied query expression and facilitates to distinguish such programming faults from an actual test case mismatch.

In a preferred embodiment the error statement comprises a proposal statement indicating components which can be extracted from the data structure.

This accelerates the adaption of the analyzing method to new or modified test cases requiring different extracted information.

In a preferred embodiment the analysis result comprises an alarm message which is sent to the server, causing the server to react depending on an alarm type indicated in the alarm message.

This enables the server to react on the results of the test case, e.g., to de-activate the communication protocol interface, if the alarm-type indicates a serious test mismatch.

In a preferred embodiment the analyzed communication protocol is applied in a security infrastructure, especially the communication protocol is a Certificate Management Protocol (CMP) for obtaining digital certificates in a public key infrastructure.

Especially communication protocols applied in security infrastructure have to be tested extensively due to certification or public release requirements. Further, a variety of such communication protocols exist and have to be tested and most of them comprise ASN.1 encoded data structures.

In a preferred embodiment the ASN.1 query unit comprises a command line interface configured to input at least one query expression to query the data structure.

This allows easy input and enhancements of query expressions.

Unless indicated otherwise in the description below, the terms "send", "receive", "query", "analyze", "output", and the like preferably relate to actions and/or processes and/or processing steps that alter and/or produce data and/or that convert data into other data, the data being able to be presented or available as physical variables, in particular, for example as electrical impulses. In particular, the expression "computer" should be interpreted as broadly as possible in order to cover in particular all electronic devices having data processing properties.

Computers can therefore be for example personal computers, servers, programmable logic controllers (PLCs), handheld computer systems, Pocket PC devices, mobile radios and other communication devices that can process data in computer-aided fashion, processors and other electronic devices for data processing.

### Brief Description of the Drawing

- Fig. 1: illustrates an embodiment of the inventive method performed by an embodiment of the inventive analyzing apparatus.
- Fig. 2: schematically illustrates an embodiment of the inventive ASN.1 query unit.
- Fig. 3: schematically shows an example of an ASN.1 structure of an ASN.1 encoded data.
- Fig. 4: illustrates an embodiment of a dot-notation syntax of an inventive query expression.
- Fig.5: illustrates a source code of/processing capacities required for a protocol testing software program including the ASN.1 query unit in comparison with a processing software with an integrated specific ASN.1 application programming interface.

### Description of Examples

The invention will be explained in more detail by reference to the accompanying figures.

Equivalent parts in the different figures are labeled with the same reference signs.

It is noted that in the following detailed description of embodiments, the accompanying drawings are only schematic, and the illustrated elements are not necessarily shown to scale. Rather, the drawings are intended to illustrate functions and the co-operation of components. Here, it is to be understood that any connection or coupling of functional blocks, devices, components or other physical or functional units could also be implemented by an indirect connection or coupling, e.g., via one or more intermediate elements. A connection or a coupling of elements or components or nodes can for example be implemented by a wire-based, a wireless connection and/or a combination of a wire-based and a wireless connection. Functional units can be implemented by dedicated hardware, e.g., processor, firmware or by software, and/or by a combination of dedicated hardware and firmware and software. It is further noted that each functional unit described for an apparatus can perform a functional step of the related method. In the same way, each functional step described for a method can be performed in a functional unit of the related apparatus.

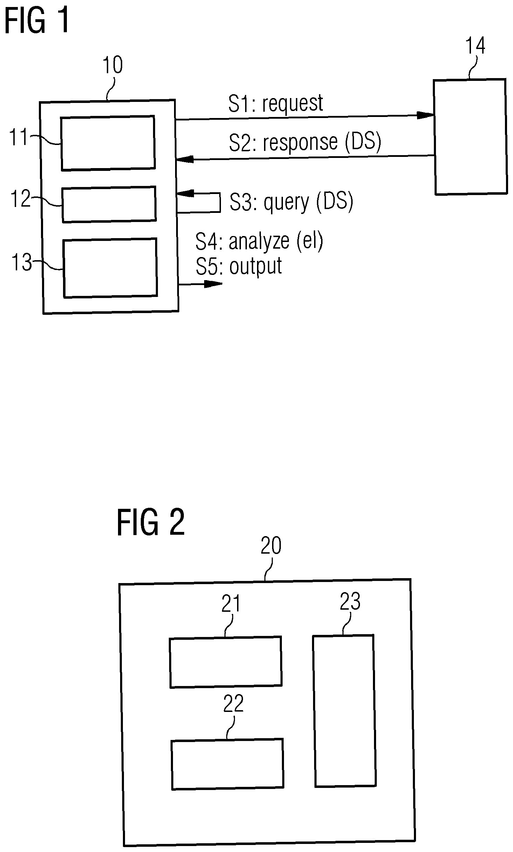

Fig. 1 shows an embodiment of an analyzing apparatus 10 performing an automatic protocol test of a communication protocol implemented on a server 14. The server 14 can be any device comprising a protocol interface which implements the communication protocol to be analyzed. The server 14 and the analyzing apparatus 10 can be implemented by physically separated devices or integrated into one single device. The analyzing apparatus 10 comprises a server interface 11, an ASN.1 query unit 12 and an output interface 13.

The server 14 is located in an industrial environment, e.g., a manufacturing plant, a railway environment or a building infrastructure. The protocol is, e.g., a Certificate Management Protocol (CMP) used for obtaining X.509 digital certificates in a public key infrastructure. The server 14 can be configured as a certification authority (CA) or a registration authority (RA), or any device with the protocol implemented on it. CMP is a protocol that has ASN1 structures in its request and response messages. The protocol is widely deployed, since it is a core component of the 3GPP (3rd Generation Partnership Project) specification, hence it is ubiquitous within the telecommunications infrastructure. The railway industry is another example where CMP is used, where it is featured in the UNISIG Subset-137 specification. For instance, the analysed communication protocol is applied in a security infrastructure. The analysed communication protocol can also be a Cryptographic Message Syntax (CMS) protocol, an Online Certificate Status Protocol (OCSP) or similar. In the example described below.

When integrating a new component, here the server 14, that claims to implement CMP protocol the following automated protocol test is performed:
In a first step S1, the analyzing apparatus 10 sends a request message according to a test case of the communication protocol to the server 14. I.e., the test case, which is part of a test suite located in the analyzing apparatus 10 loads a predefined CMP request from a file and sends it to the server 14. In return, the analyzing apparatus 10 receives a response message including a data structure DS encoded in ASN.1 scheme from the certification server 14, see S2.

In step S3, the analyzing apparatus 10 queries the data structure DS for at least one information defined by the test case, and automatically extracts the information el from the ASN.1 encoded data structure DS. The extracted information el is analyzed with respect to an expected information defined in the test case, see S4 and the analysis result is output.

The server interface 11 of the analyzing apparatus 10 is configured to perform the sending and receiving steps S1, S2. The ASN.1 query unit 12 of the analyzing apparatus 10 is configured to query the information from the ASN.1 encoded data structure DS. The output interface 13 of the analyzing apparatus 10 is configured to perform the analyzing and outputting steps S4, S5. Further the output interface 13 is configured send an analysis result to the server comprises an alarm message, causing the server to react depending on an alarm type indicated in the alarm message. The alarm type is selected based on a predefined rule, preferably provided by the test case.

An embodiment of the ASN.1 query unit 12is explained in more detail with reference to Fig. 2. The ASN.1 query unit 20 comprises a query interface 21 and an ASN.1 library 22. The query interface 21 provides query expressions structured in the dot-notation syntax chaining components of the ASN.1 encoded data structure DS indicating the location of the desired information. The ASN.1 library comprises an indication of the communication protocol to be analysed and provides an ASN.1 structure of the ASN.1 encoded data of the communication protocol as an object to which a dot-notation applies.

The ASN.1 query unit 20 can be an integrated part of the analyzing apparatus 10 or provided as a separate module. The ASN.1 query unit 20 can be implemented in Software, Firmware or Hardware as a functional block providing the described features and implemented.

The analysis focuses on specific parts of the data structure DS, as illustrated in Example 1 below. It shows an exemplary test case, in which the server 14 must reject a signature-protected request that does not include certificates in the data extraCerts field of the CMP protocol. The query performed by the ASN1 query unit 12 is highlighted by bold letters. Remark for documentation is set in italic script.

### Example 1:

### [Documentation] Ensure the server rejects requests that use signature protection, but fail to include the required certificates in the extraCerts field. Ref: RFC 9483, Sec 3.3

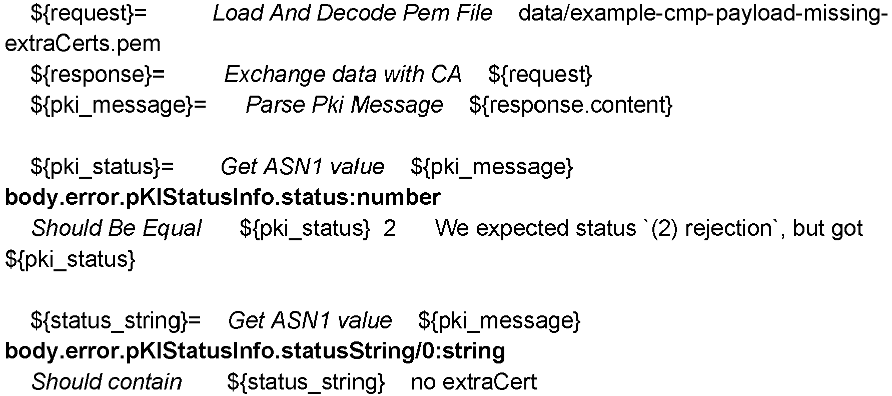

The testcase loads a predefined CMP request from a file and sends it to the server 14. The predefined request has some deliberate errors; namely, it does not include some fields that should have been there. Given such a malformed request, the server 14 is expected to respond with an error that features a specific error code (2), and the error message should also contain some predefined text ("no extraCert"). The test is written in a language called RobotFramework. In this case we use an ASN.1 library, which is made accessible through the instruction called "Get ASN1 value". It takes a data structure and the query at the input.

The notation of the query expressions is concise, it enables keeping the test itself short and focuses on the business logic, rather than on the technicalities of ASN1 parsing, which would have taken more lines of code and be a distraction.

The query expression, i.e. the concept of a querying syntax for ASN1, is built upon a "dot-notation" syntax used to express hierarchy, especially in object-oriented languages. Dot-notation is a feature in object-oriented programming languages like Python that allows searching an extensive database for an object's attributes and methods. For example, the expression "car.wheel.axle" refers to an object called "car", which has an attribute called "wheel", which in turn has an attribute called "axle".

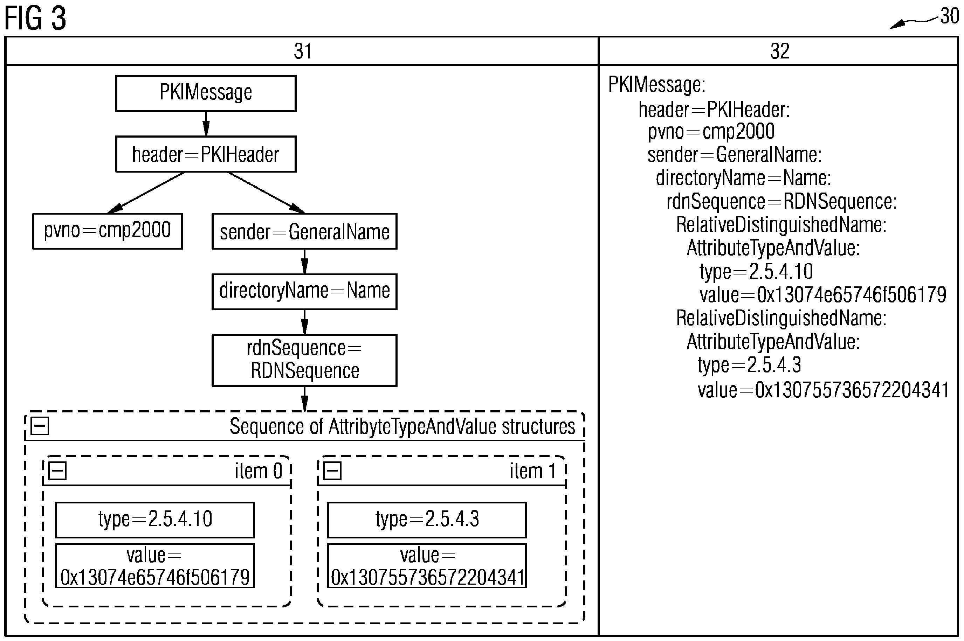

The query expression exposes an ASN.1 encoded data structure as an object to which the dot-notation applies. To illustrate this concept, consider an example data structure 30 shown in graphical representation 31 and in textual representation 32 in Fig. 3. Data structure 30 is of type PKIMessage, as defined in RFC 4210. The ASN.1 encoded PKI message comprising an information entity "header" with sub-entities "pvno" and "sender". The sub-entity "sender" comprises again sub-entities "directory name", "rdnSequence" the latter comprising a "Sequence of "AttribyteTypeAndValue structures" with, e.g., "item 0" and "item 1". For brevity, only a small subset of the complete structure is shown.

For this data structure 30 a first example of a query expression 'header.pvno' will return the value 'cmp2000'.

In another example the dot-notation is augmented with a "slash-notation", to access a specific element inside a sequence. In Fig. 3, the element 'rdnSequence' is a list of multiple entries marked as "item 0" and "item 1". The query 'header.sender.directoryName.rdnSequence/0' will return the first, i.e., index 0 element inside 'rdnSequence':

```
      RelativeDistinguishedName:
      AttributeTypeAndValue:
       type=2.5.4.10
       value=0x13074e65746f506179
```

The query 'header.sender.directoryName.rdnSequence/0/0.value' will return the first element of 'rdnSequence', then dive in and extract the first element of that (which will be of type 'AttributeTypeAndValue'), then it will return the attribute called 'value': 0x13074e65746f506179.

In addition to the syntax for specifying the location of the desired element in the structure, several primitives are provided to transform extracted data into a specific type of data, i.e., format: as text, as a number, as a Boolean value, or as bytes, etc. This is accomplished by adding a "cast expression" to the end of the query, using the notation ": <type>", e.g., 'header.sender.directoryName.rdnSequence/0/0.value :bytes'. The term element is used here synonymous to the extracted information.

The concept of the query expressions is a language-agnostic notation, which means that it can be implemented in any programming language. Once the notation is understood the knowledge and experience of using it can be used in any programming language that implements the query interface.

The syntax of query expressions is defined using Extended Backus-Naur Form (EBNF) notation specified by World Wide Web Consortium W3C as follows:

```
 Expression ::= Path (":" cast)?
 Path ::= Component ("." Component | "/" index)*
 Component ::= Word
 Word ::= [a-zA-Z]+ ([a-zA-Z]+ lindex)*
 cast ::= "bytes" | "string" | "number"| "der" | "boolean"
 index ::= [0-9]+
```

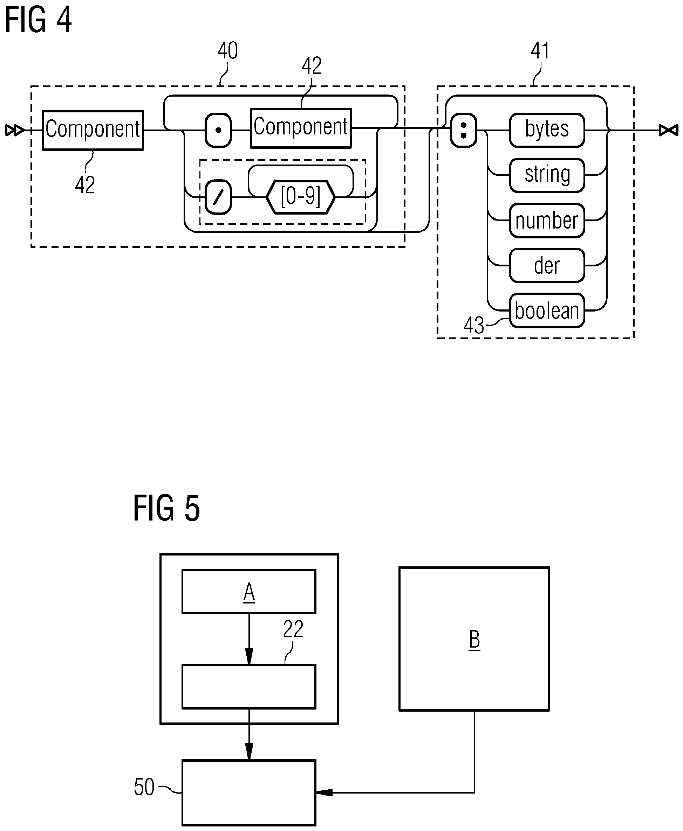

The syntax is visualized as a railroad diagram in Fig.4.

A query expression consists of a path 40, optionally followed by a cast expression 41. The cast expression 41 indicates a transformation of the result into a particular data type. The query expressions are structured in the dot-notation syntax chaining components 42 of the ASN.1 encoded data structure indicating the location of the desired information. A component 42 is a word that must start with a letter and can be followed by any number of letters or digits. The cast expression 41 indicates the requested type of data/format 43 of the extracted information, e.g. byte, string, number, Boolean, "der". "der" denotes Distinguished Encoding Rules and specifies a method for encoding a data object, including public key infrastructure certificates and keys.

Besides the query interface 21, the ASN.1 query unit 20 comprises a command line interface 23. The command line interface 23 is implemented, e.g., in the Python programming language. It is invoked as follows:

| | | | | |
|---|---|---|---|---|
| **Syntax** | asn1path <schema> <path to input data> <query[:cast]> | | | |
| | *Where* | | | |
| | | - schema: the definition of the ASN1 schema for the given data structure | | |
| | | - path: path to a file with an input structure that we want to query, if the value STDIN is given, the program will expect the data to be sent to its "standard input" stream. | | |
| | | - query: the query itself, which may include a type cast | | |
| **Examp le** | asn1path rfc4210.PKIMessage input.bin header.pvno:number >2 | | | |
| | asn1path rfc4210.PKIMessage input.bin header.pvno:string > cmp2000 | | | |
| **Explan ation** | The schema for PKIMessage is (some parts are omitted for brevity): | | | |
| | | PKIMessage ::= SEQUENCE { | | |
| | | header | PKIHeader, | |
| | | body | PKIBody, | |
| | | | | |
| | | } | | |
| | | PKIHeader ::= SEQUENCE { | | |
| | | pvno | INTEGER { cmp1999(1), cmp2000(2) }, | |
| | | sender | GeneralName, | |
| | | recipient | GeneralName, | |
| | | messageTime | [0] GeneralizedTime | OPTIONAL, |
| | | ... | | |
| | | } | | |
| | Notice how the general structure includes a header and a body, while the header has an attribute called pvno, defined as a named integer. In other words, only two values are possible, and they can be referred to either by number, i.e., 1 and 2, or by name, i.e., "cmp1999" and "cmp2000" respectively. | | | |
| | The first query means "give me the value of header.pvno as a number", resulting in 2. The second query means "give me the named value of header.pvno", resulting in "cmp2000". | | | |
| | Note that in this case, the file input.bin is an ASN1 DER-encoded binary file (i.e., it uses Distinguished Encoding Rules), we enclose an example of such an input file as Base64, so that it can be a part of this document: | | | |
| | | | | |
| | | | | |

The ASN.1 query unit 20 returns an error statement if the queried information cannot be extracted, the error statement indicating the component which could not be extracted.

To illustrate the error-handling capabilities, consider the query expression below for the example structure discussed earlier:

```
 'header.sender.directoryName.profile.value'
```

Note that there is no 'profile' component in the data structure, but it is present in the query expression. When this query is executed, the following error is returned:

```
 Traversal ERROR, got this far: 'header.sender.
directoryName', issue at 'profile', the query was
 'header.sender.directoryName.profile.value'
 Available keys at this step: ['rdnSequence'], try 'header.sender.directoryName.rdnSequence'
```

The error message shows which part of the query is correct, and what alternative query could be tried by the user. The error statement comprises a proposal statement indicating components which can be extracted from the data structure.

The ASN.1 query unit 20 can also be used as building block in scripts or to simplify logic in software.

The use as building block in scripts is illustrated in following example:
An application receives a request which is a CMP PKIMessage structure and needs to decide whether to accept or reject the request, depending on the value of the pvno field: accept if it is cmp2000, otherwise reject. This can be implemented as a pipeline as follows. Writing pipelines is significantly faster and easier than using a programming language to write a program that implements the same functionality.

| | | |
|---|---|---|
| **Command** | ...\| asn1path rfc4210.PKIMessage STDIN header.pvno:string \| grep cmp2000 \| echo $? \|... | |
| **Explanation** | Here we use a feature of Unix-like operating systems called "pipeline", which enables us to combine commands using the pipe symbol '\|', connecting them such that the output of the command on the left side of the pipe becomes the input of the command on the right side of the pipe. | |
| | Pipelines make it easy to build complex logic out of simple commands, akin to combining small building blocks to create a toy-castle. The pipeline performs the following: | |
| | | - ... is a placeholder for some process that produces the input data (e.g., a server application which received the data from the network, loaded it from a file, etc.) for the next command. |
| | | - The data are then fed into the asn1path tool, the output of which is the value extracted from the header.pvno part of the data, represented as a string. |
| | | - Then this extracted string is passed to the grep command, which is a pattern-matching utility that will look for the text "cmp2000" in its input. |
| | | - The exit status of grep will then be printed on the screen using the echo command; note that grep's exit status is 0 if the pattern was found, otherwise 1. |
| | | - ... is a placeholder for another command which will then use the 0 or 1 value to decide what to do next. |
| | This can be summarized as "extract the header.pvno value as a string and see if it contains cmp2000, if it is there - say 0, otherwise say 1". | |

The benefit of simplified logic arises from the fact that the ASN.1 query unit 20 provides an abstraction layer that hides the complexity of ASN.1, thus enabling software developers to write higher-level code. Fig.5 shows two hypothetical programs A and B.

The size of the depicted program A is a rough representation of the amount of source code that needs to be written in program A and program B to implement the same functionality. The size is not to scale, i.e., we only convey that "Program A has fewer lines of code than Program B", not that "Program B is exactly N times bigger than Program A".

The source code size of program B will vary depending on the programming language and library of choice. For example, some languages are more expressive and allow writing concise programs which are shorter than those written in more verbose languages. Program A relies on the ASN.1 library 22 of the ASN.1 query unit 20 for data extraction, while program B uses a lower-level API. The ASN.1 library 22 can either rely on a lower-level ASN.1 library 50 or implement all the functionality in a single component; this does not matter, as long as the query interface 21 of ASN1 query unit 20 API is implemented.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

## Claims

1. Computer-implemented method for automatically analyzing a communication protocol implemented in a server (14), comprising the steps performed by an analyzing apparatus (10),
- sending (S1) a request message according to a test case of the communication protocol to the server (14),
- receiving (S2) a response message including a data structure (DS) encoded in ASN.1 scheme from the server (14),
- querying (S3) the data structure for at least one information defined by the test case using an ASN.1 query unit, and automatically extracting the information (el) from the ASN.1 encoded data structure,
- analyzing (S4) the extracted information (el) with respect to an expected information defined in the test case, and
- outputting (S5) the analysis result to an output interface.

2. Computer-implemented method according to claim 1, wherein the ASN.1 query unit (12, 20) comprises a query interface (21) and an ASN.1 query library (22).

3. Computer-implemented method according to claim 2, wherein the ASN.1 library (22) comprises an indication of the communication protocol to be analyzed and provides an ASN.1 structure of the ASN.1 encoded data of the communication protocol as an object to which a dot-notation applies.

4. Computer-implemented method according to claim 2-3, wherein the query interface (21) provides query expressions structured in the dot-notation syntax chaining components (42) of the ASN.1 encoded data structure (DS) indicating the location of the desired information (el).

5. Computer-implemented method according to claim 4, wherein the query expression (21) comprises a cast expression (41) indicating the requested type of data/format (43) of the extracted information (el).

6. Computer-implemented method according to claim 5, wherein the extracted data is transformed into the requested type of data by primitives of the query interface (21).

7. Computer-implemented method according to any of the preceding claims, wherein the ASN.1 query unit (12, 20) returns an error statement if the queried information cannot be extracted, the error statement indicating the component (42) which could not be extracted.

8. Computer-implemented method according to claim 7, wherein the error statement comprises a proposal statement indicating components (42) which can be extracted from the data structure (DS).

9. Computer-implemented method according to any of the preceding claims, wherein the analysis result comprises an alarm message which is sent to the server, causing the server to react depending on a type indicated in the alarm message.

10. Computer-implemented method according to any of the preceding claims, wherein the analyzed communication protocol is applied in a security infrastructure, especially the communication protocol is one of a Certificate Management Protocol (CMP) for obtaining digital certificates, a Cryptographic Message Syntax (CMS) protocol, an Online Certificate Status Protocol (OCSP) in a public key infrastructure.

11. Analyzing apparatus (10) for automatically analyzing a communication protocol implemented in a server (14) comprising a server interface (11), an ASN.1 query unit (12, 20) and an output interface (13), wherein
the server interface (11) is configured for:
- sending (S1) a request message according to a test case of the communication protocol to the server (14),
- receiving (S2) a response message including a data structure (DS) encoded in ASN.1 scheme from the server (14),
the ASN.1 query unit is configured for:
- querying (S3) the data structure for at least one information defined by the test case using an ASN.1 query unit, and automatically extracting the information (el) from the ASN.1 encoded data structure,
the output interface is configured for:
- analyzing (S4) the extracted information (el) with respect to an expected information defined in the test case, and
- outputting (S5) the analysis result to an output interface.

12. ASN.1 query unit (12, 20) for querying information stored in data structures encoded according to ASN.1 comprising a query interface and an ASN.1 library configured for
- querying (S3) the data structure for at least one information defined by the test case using an ASN.1 query unit, and automatically extracting the information (el) from the ASN.1 encoded data structure.

13. ASN.1 query unit (12, 20) according to claim 11 comprising a command line interface (23) configured to input at least one query expression to query the data structure (DS).

14. ASN.1 query unit (12, 20) according to any of claims 11-12, wherein the ASN.1 library (22) comprises an indication of the communication protocol to be analyzed and provides the ASN1 structure of the ASN.1 encoded data structures (DS) of the communication protocol as an object to which the dot-notation applies.

15. A computer program product directly loadable into the internal memory of at least on one digital computer, comprising software code portions for performing the steps of claim 1-10 when said product is run on said at least one digital computer.
